# EUROPEAN PATENT SPECIFICATION

(11) **EP 2 705 686 B1**
(45) Date of publication and mention of the grant of the patent: **18.11.2020**
(21) Application number: 11864751.0
(22) Date of filing: 03.05.2011
(51) Int. Cl.: H04L 5/00, H04L 1/18, H04W 28/16, H04L 5/14

(54) **CONTROL SIGNALLING IN CARRIER AGGREGATION SYSTEMS**
STEUERSIGNALISIERUNG BEI TRÄGERAGGREGATIONSSYSTEMEN
SIGNALISATION DE COMMANDE DANS DES SYSTÈMES À AGRÉGATION DE PORTEUSES

(43) Date of publication of application: 12.03.2014
(73) Proprietor: Nokia Solutions and Networks Oy, 02610 Espoo (FI)
(72) Inventor: ZHANG, Li, Beijing 100012 (CN); SKOV, Peter, Beijing 100044 (CN); WU, Chunli, Beijing 102208 (CN); LIN, Jiezhen, Beijing 100083 (CN)
(74) Representative: Hepworth Browne
(86) International application number: PCT/CN2011/073605
(87) International publication number: WO 2012/149675

(56) References cited:
- WO-A1-2010/049587
- WO-A1-2011/022485
- WO-A1-2011/022485
- WO-A1-2011/047196
- CN-A- 1 568 040
- CN-A- 101 951 684
- PANASONIC: "UE processing time in case of inter-band Carrier Aggregation", 3GPP DRAFT; R4-104176, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Jacksonville; 20101115, 9 November 2010 (2010-11-09), XP050499402, [retrieved on 2010-11-09]
- CATT: "Consideration on Inter-band Carrier Aggregation for TDD", 3GPP DRAFT; R2-111833_CONSIDERATION ON INTER-BAND CARRIER AGGREGATION FOR TDD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20110411, 2 April 2011 (2011-04-02), XP050494204, [retrieved on 2011-04-02]
- CATT: "PDCCH design in LTE-A", 3GPP DRAFT; R1-101755, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419164, [retrieved on 2010-04-06]
- NOKIA CORPORATION ET AL.: 'RACH and carrier aggregation' 3GPP TSG-RAN WG2 MEETING #68BIS, R2-101285 26 February 2010, XP050421787

## Description

### FIELD OF INVENTION

The present invention relates to the field of communication networks, e.g. cellular communication networks.

### BACKGROUND OF THE INVENTION

In current cellular communication networks a user equipment (e.g. a terminal) can receive and transmit via only one carrier which has a certain bandwidth. In order to increase the available bandwidth it has been considered to aggregate two or more carriers as is described e.g. in 3GPP LTE Advanced (LTE Release 10) . Herein, 3GPP refers to the "3rd generation partnership project" and LTE refers to "3GPP long term evolution".

As is described in 3GPP TS 36.211 V9.1.0 (March 2010), individual carriers may have different time division duplex (TDD) configuration allowing to configure a specific TDD configuration for each carrier. This is referred to as carrier-specific TDD configuration.

When TDD carriers with different configurations are aggregated for a single TDD user equipment, one option is to forbid simultaneous transmission and reception, that means certain subframes cannot be scheduled. Then another option is to allow simultaneous transmission and reception, then all subframes can be scheduled, but the timing of control signaling transmission is a problem. In view of the above-described situation, there exists a need for an improved technique that enables to provide for carrier aggregation in communication networks while substantially avoiding or at least reducing one or more of the above-identified problems.

WO 2011/022485 relates to a method for receiving data using a user agent (UA) configured to communicate with a wireless communications network using a first and second communication carrier is presented. The method includes receiving control information, at a first time interval, using the first communication carrier. The control information allocates a resource on at least one of the first communication carrier and the second communication carrier. The control information indicates whether a carrier switch is required. In one implementation, when the control information indicates a carrier switch is required, the method includes ceasing signal reception on the first communication carrier, and receiving a signal on the second communication carrier.

WO 2010/049587 describes systems and methods for enabling the dynamic allocation of certain sub frames as downlink or uplink resources in a time division duplexed over the air communications system. A base station or eNB may allocate certain subframes within a repeating radio frame of a TDD configuration as either DL or UL subframes for communicating to user equipment or UE devices to increase efficient use of system resources based on the data to be transmitted. Methods for determining the capabilities of a selected UE and based on the determining step, dynamically allocating certain subframes are disclosed. The methods and systems are compatible with user equipment that does not support the dynamic allocation of subframes.

### SUMMARY OF THE INVENTION

The invention is defined by the appended claims; embodiments not falling under the scope of the claims should be interpreted as examples useful for understanding the invention.

The needs identified above may be met by the subject matter according to the independent claims. Advantageous embodiments of the herein disclosed subject matter are described by the dependent claims.

According to a first aspect of the invention there is provided a timing entity of a user equipment, the timing entity in accordance with claim 1.

As disclosed herein, the determination of a time slot for the control signaling transmission is based on the temporal configuration of the uplink and downlink resources of both, the first carrier and the second carrier.

Usually, the temporal configuration of uplink and downlink resources of a carrier is hard coded, i.e. the temporal configuration is not changed during operation. For a single carrier transmission, also timing of control signaling transmissions need not be changed during operation.

However, the timing entity herein disclosed allows for a change of a timing of control signaling transmissions, even while still using hard coded carrier specific TDD configurations for the carriers that may be aggregated for increasing the bandwidth.

As disclosed herein, the first carrier and the second carrier are spaced by a certain frequency interval of non-zero width (non-continuous carrier aggregation).

As disclosed herein, the communication network is a wireless communication network such as a cellular communication network. For example, the cellular communication network is based on LTE advanced technology described in 3GPP LTE Release 10.

As disclosed herein, the control entity is used for determining the timing of two or more control signaling transmissions. These timings are then stored for a later use. For example, all possible configurations and combinations of configurations of two aggregateable carriers may be analyzed and the respective timing data may be determined by the timing entity. Further, the timing entity, or another entity, may store such timing data for a later use.

As disclosed herein, the data transmission occurs in a first time slot n; and the timing data specify for the control signaling transmission a second time slot tg; wherein the second time slot tg is spaced by a temporal distance from the first time slot n; the temporal distance is greater than or equal to a maximum time duration required for signaling between the base station and the user equipment while the second time slot is the temporally closest time slot providing a resource of the first type required for the control signaling transmission. Various configurations requiring different time slot configurations are possible. For example, the timing data determination for a single control signal transmission or for several control signal transmissions are taken into account.

In this regard it should be understood that referral to a second time slot only serves to differentiate the respective time slot from a first time slot. The numbering however has no further meaning. For example if two of the control signal transmissions are considered, the respective time slots may be labeled as second time slot, third timeslot, etc.

As disclosed herein, the data transmission is an uplink data transmission on the first carrier occurring in a first time slot n; the control signaling transmission is an uplink grant signaling transmission; and the timing data specify for the uplink grant signaling transmission a second time slot tg = n - k1, wherein k1 is the smallest number of time slots which (i) spaces the second time slot tg from the first time slot n by a time duration greater than or equal to a maximum time duration required for signaling between the base station and the user equipment and (ii) ensures the second time slot provides a downlink resource on the second carrier.

As disclosed herein, the data transmission, e.g. an uplink data transmission occurs in a first time slot n; and the control signaling transmission is an acknowledgement/non-acknowledgement signaling transmission; the timing data further specifying for the acknowledgement/non-acknowledgement signaling transmission a second time slot ta = n + k2, wherein k2 is the smallest number of time slots which (i) spaces the second time slot ta from the first time slot n by a time duration greater than or equal to a maximum time duration required for signaling between the base station and the user equipment and (ii) ensures the second time slot providing a downlink resource on the second carrier. According to an embodiment, the first carrier corresponds to a scheduled cell, and the second carrier corresponds to a scheduling cell. The maximum time duration required for signaling between the base station and the user equipment used to define k1 and k2 in the above mentioned embodiments, is 4 (in words: "four") subframes in 3GPP LTE.

In cross-carrier scheduling, i.e. where control signaling transmissions are transmitted over carriers different from the carriers of the data transmission, both a primary cell and a secondary cell can be the scheduling cell.

In the disclosed circumstance where the control signaling transmission is an uplink grant signaling transmission and the disclosed circumstance where the control signaling transmission is an acknowledgement/non-acknowledgement signaling transmission, the first carrier forms a scheduled cell and the second carrier forms a scheduling cell. Having regard to e.g. LTE terminology, these embodiments relate to a PDCCH-PUSCH-PHICH timing. Herein PDCCH is referred to as physical downlink control channel, PUSCH is referred to as physical uplink shared channel and PHICH is referred to as physical indicator channel as commonly used in 3GPP LTE. In a typical conflict time slot (subframe in 3GPP LTE), the scheduling cell has an uplink resource in the conflict time slot, whereas the scheduled cell has a downlink resource in the scheduled cell. For such a conflict time slot, the timing defined above may be applied. In another typical conflict time slot, the scheduling cell has an downlink resource in the conflict time slot, whereas the scheduled cell has an uplink resource in the scheduled cell. For such a conflict time slot, as well as for non-cross carrier scheduling, a release 8 or release 9 or release 10 timing may be also applied.

As disclosed herein, the data transmission is an downlink data transmission on the first carrier occurring in a first time slot n; and the control signaling transmission is a downlink assignment signaling transmission; the timing data specifying for the downlink assignment signaling transmission a second time slot tg which is the latest time slot before the first time slot n that provides a downlink resource on the second carrier.

In the disclosed circumstance where the control signaling transmission is a downlink assignment signaling transmission, the first carrier forms a scheduled cell and the second carrier forms a scheduling cell. Having regard to e.g. LTE terminology, these relate to a PDCCH-PDSCH timing. Herein PDCCH is referred to as physical downlink control channel, PDSCH is referred to as physical downlink shared channel as commonly used in 3GPP LTE. In a typical conflict time slot (subframe in 3GPP LTE), the scheduling cell has an uplink resource in the conflict time slot, whereas the scheduled cell has a downlink resource in the scheduled cell. For such a conflict time slot, the timing defined above may be applied. In another typical conflict time slot, the scheduling cell has a downlink resource in the conflict time slot, whereas the scheduled cell has an uplink resource in the scheduled cell. For such a conflict time slot, as well as for non-cross carrier scheduling, a release 8, or release 9, or release 10 timing as described for LTE may be also applied.

As disclosed herein, the data transmission is a downlink data transmission on the first carrier occurring in a first time slot n; and the control signaling transmission is an acknowledgement/non-acknowledgement signaling transmission; the timing data specifying for the acknowledgement/non-acknowledgement signaling transmission a second time slot ta = n + k2, wherein k2 is the smallest number of time slots which (i) spaces the second time slot ta from the first time slot n by a time duration greater than or equal to a maximum time duration required for signaling between the base station and the user equipment and which (ii) ensures the second time slot providing an uplink resource on the second carrier.

In the disclosed circumstance where the control signaling transmission is an acknowledgement/non-acknowledgement signaling transmission, the first carrier forms a secondary cell and the second carrier forms a primary cell. As is common terminology, herein a primary cell is the cell in which the UE performs initial connection/reconnection whereas a secondary cell may only be configured if a connection/re-connection of the UE to a primary cell is already established. Having regard to e.g. LTE terminology, these embodiments relate to a PDSCH-Ack/Nack timing. Herein PDSCH is referred to as physical downlink shared channel, whereas Ack/Nack is referred to as acknowledge/non-acknowledge. In a typical conflict time slot (subframe in 3GPP LTE), the secondary cell has an uplink resource in the conflict time slot, whereas the primary cell has a downlink resource. For such a conflict time slot, the timing defined above may be applied. In another typical conflict time slot, the primary cell has a uplink resource in the conflict time slot, whereas the secondary cell has an downlink resource in the scheduled cell. For such a conflict time slot, a release 8 timing, or release 9 timing, or release 10 timing as described for LTE may be also applied.

A base station of a communication network is also described, the base station comprising a timing entity according to the first aspect or an embodiment thereof.

As disclosed herein, the control entity of the timing entity is configured for determining the timing data based on configuration indicating data being indicative of the temporal configuration of the uplink and downlink resources on both, the first carrier and the second carrier. Hence, the configuration indicating data is indicative of the temporal configuration of the uplink and the downlink resources of the first carrier and the temporal configuration of the uplink and the downlink resources of the second carrier.

As disclosed herein, the base station further comprises a second controller for providing the timing data to the user equipment. Herein, such an arrangement is also referred to as explicit signaling scheme since it explicitly provides to the user equipment the timing data defining a timing of a control signaling transmission. An advantage may be that the user equipment may not necessarily need a timing entity itself.

According to this disclosure, the controller is adapted for providing the configuration indicating data to the user equipment. As the timing data are not explicitly provided to the user equipment, this embodiment is also referred to herein as implicit signalling scheme. The implicit signalling scheme allows the user equipment to determine the timing data defining a timing of a control signaling transmission by itself, e.g. by means of a timing entity as described herein.

As mentioned above, the herein disclosed subject matter relates to an explicit signalling scheme whereas other embodiments relate to an implicit signalling scheme. Hence, in an approach to unify the wording of both schemes, the timing data as well as the configuration indicating data may be referred to as timing related data since both terms are related to the timing of the respective control signalling transmission. However, it should be understood that the timing related data in the form of configuration indicating data do not include data that explicitly specify a timing.

According to the disclosure, the base station is a base station of a cellular communication network, e.g. an e-NodeB capable of operating according to 3GPP LTE Release 10. The term "base station" as used herein includes at least one of (i) a network node providing a radio resource of an air interface, (ii) a control entity for controlling the air interface and (iii) an entity providing access to a core network. According to the subject-matter disclosed herein, the base station is adapted for providing the functionality described above and/or for providing the functionality as required by one or more of the aforementioned arrangements.

According to the disclosure herein, there is provided a user equipment for a communication network, the user equipment used with the implicit signalling scheme as it allows determination of Liming data from received configuration indicating data. However, the user equipment may be additionally configured to be operable according to the explicit signalling scheme.

In case of implicit signaling, the user equipment comprises a controller for receiving configuration indicating data from the base station.

As disclosed herein, the user equipment is appropriately adapted for providing the functionality as disclosed herein.

As is also disclosed herein, a user equipment of a communication network is provided, the communication network further including a base station, the user equipment and the base station being capable of communicating with each other over at least two carriers, the at least two carriers including a first carrier and a second carrier, both having uplink and downlink resources, the first carrier and the second carrier having different temporal configuration of its uplink and downlink resources, the user equipment comprising: a controller being adapted for receiving timing data from the base station, the timing data defining a timing of a control signalling transmission being related to a data transmission on the first carrier; the controller being adapted for adjusting, depending on the timing data, the timing of the control signaling transmission by specifying a time slot in which there is available a resource of a first type on the second carrier for the control signaling transmission; and the resource of the first type being either an uplink resource or a downlink resource.

Accordingly, a user equipment is capable of operating with a base station employing the explicit signalling scheme described herein.

The user equipment is adapted for providing the functionality as disclosed with regard to one or more of the disclosure hereof and/or for providing the functionality as required. According to a second aspect of the invention there is provided a method of operating a timing entity in user equipment of a communication network, the method in accordance with claim 7.

The method is adapted for providing the functionality as disclosed herein.

There is provided a method of operating a base station.

As herein disclosed, there is also provided a method of operating a user equipment of a communication network, the method comprising: determining timing data according to the method of the fifth aspect or an embodiment thereof. According to embodiments of the seventh aspect, the method is adapted for providing the functionality as disclosed with regard to one or more of the aforementioned aspects and embodiments and/or for providing the functionality as required by one or more of the aforementioned aspects and embodiments.

As herein disclosed subject matter, there is also provided a method of operating a controller of a user equipment of a communication network, the communication network further including a base station, the user equipment and the base station being capable of communicating with each other over at least two carriers, the at least two carriers including a first carrier and a second carrier, both having uplink and downlink resources, the first carrier and the second carrier having different temporal configuration of its uplink and downlink resources, the method comprising: receiving timing data from the base station, the timing data defining a timing of a control signalling transmission being related to a data transmission on the first carrier; adjusting, depending on the timing data, the timing of the control signaling transmission by specifying a time slot in which there is available a resource of a first type on the second carrier for the control signaling transmission; and the resource of the first type being either an uplink resource or a downlink resource.

The controller of a base station or a user equipment as disclosed herein comprises a first control unit and a second control unit, wherein the first control unit is adapted for adjusting the timing of a control signalling transmission and the second control unit is adapted for receiving/transmitting of timing data/configuration indicating data.

As disclosed herein there is provided a computer program according to claim 8 .

As used herein, reference to a computer program is intended to be equivalent to a reference to a program element and/or a computer readable medium containing instructions for controlling a computer system to effect and/or coordinate the performance of the above described method.

The computer program may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded. The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

In the above there have been described and in the following there will be described exemplary embodiments of the subject matter disclosed herein with reference to a timing entity, a base station, an user equipment, respective methods of operation and computer programs. It has to be pointed out that of course any combination of features relating to different aspects of the herein disclosed subject matter is also possible. In particular, some embodiments have been or will be described with reference to apparatus type embodiments whereas other embodiments have been or will be described with reference to method type embodiments. However, a person skilled in the art will gather from the above and the following description that, unless other notified, in addition to any combination of features belonging to one aspect also any combination between features relating to different aspects or embodiments, for example even between features of the apparatus type embodiments and features of the method type embodiments is considered to be disclosed with this application.

The aspects and embodiments defined above and further aspects and embodiments of the present invention are apparent from the examples to be described hereinafter and are explained with reference to the drawings, but to which the invention is not limited.

### BRIEF DESCRIPTION OF THE DRAWINGS

Fig. 1 shows a communication network in accordance with embodiments of the herein disclosed subject matter.
Fig. 2 shows a communication network in accordance with embodiments of the herein disclosed subject matter.
Fig. 3 illustrates a temporal configuration of two carriers and respective transmissions in accordance with embodiments of the herein disclosed subject matter.
Fig. 4 illustrates a timing of a control signalling transmission in accordance with embodiments of the herein disclosed subject-matter.
Fig. 5 illustrates the timing of a control signalling transmission in accordance with embodiments of the herein disclosed subject-matter.

### DETAILED DESCRIPTION

The illustration in the drawings is schematic. It is noted that in different figures, similar or identical elements are provided with the same reference signs or with reference signs, which are different from the corresponding reference signs only within the first digit.

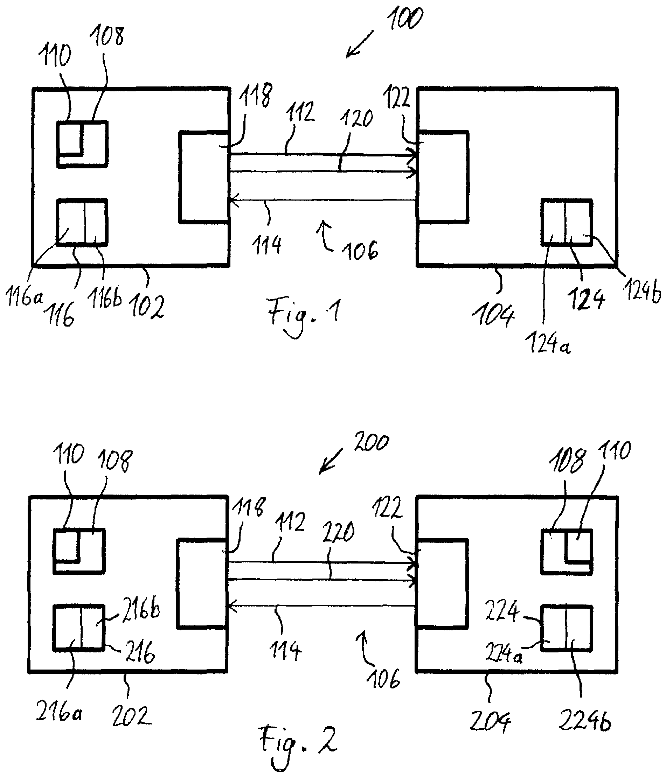

Fig. 1 shows a communication network 100 in accordance with embodiments of the herein disclosed subject matter. The communication network 100 includes a base station 102 and a user equipment 104. The base station 102 and the user equipment 104 are capable of communicating with each other over at least two carriers (not shown in Fig. 1) provided via an air interface 106.

In accordance with an embodiment, the base station 102 comprises a timing entity 108, wherein the timing entity 108 is in accordance with one or more of the embodiments of the herein disclosed subject-matter. According to an embodiment, the timing entity 108 comprises a control entity 110 adapted for determining timing data which define a timing of a control signalling transmission, generally indicated at 112 in Fig. 1. The control signalling transmission 112 is related to a data transmission generally indicated at 114 in Fig. 1. In accordance with an embodiment, the data transmission 114 is performed on a first carrier and the control signalling transmission is performed on a second carrier. Such configurations are used in so-called cross-carrier scheduling.

In accordance with an embodiment, the timing data specify for the control signalling transmission 112 a timeslot in which there is available a resource of a first type on the second carrier for the control signalling transmission 112.

According to an embodiment, the temporal configuration of the uplink and downlink resources of one of the carriers is fixedly coded (also referred to as hard-coded).

However, in case of carrier aggregation, wherein two or more carriers are aggregated to increase the bandwidth available for communication between network entities such as the base station 102 and the user equipment 104, the hard-coded carrier configuration together with a predetermined timing may decrease performance of the system if the carrier aggregation is not properly taken into account in the timing of control signalling transmissions. For example, in LTE (LTE = Third Generation Partnership Project Long-Term Evolution) timing schemes are defined for single carrier communication, i.e. a network component such as a base station or a user equipment receives or transmits only via one carrier. While such timings can be maintained for some configurations, some other configurations may require a new timing scheme in accordance with embodiments of the herein disclosed subject-matter in order to provide an efficient communication system which uses carrier aggregation.

Returning now to Fig. 1, the base station 102 comprises, in accordance with an embodiment, a controller 116 with a first control unit 116a and a second control unit 116b. The control unit 116b is adapted for providing timing data 120 to a user equipment, e.g. the user equipment 104. To this end, the base station further comprises a transceiver 118 which is adapted for transmitting and/or receiving transmissions such as data transmissions or control signalling transmissions. In accordance with an embodiment, the timing data 120 is the timing data determined by the timing entity 108 in accordance with embodiments of the herein disclosed subject matter. According to a further embodiment, the first control unit 116a is adapted for transmitting (and/or receiving) the control signalling transmission 112 according to the timing data 120. In other words, the first control unit 116a is adapted for adjusting the timing of the control signalling transmission 112, e.g. by respectively adjusting the transceiver 118.

In accordance with an embodiment, the user equipment 104 comprises a transceiver 122 for receiving the timing data 120. According to an embodiment, the user equipment 104 further comprises a controller 124 having a first control unit 124a and a second control unit 124b. In accordance with an embodiment, the second control unit 124b is adapted for receiving the timing data 120. In accordance with a further embodiment, the first control unit 124a is adapted for adjusting, depending on the timing data 120, a timing of the control signalling transmission 112 by specifying a timeslot in which there is available a resource of a first type on the second carrier for transmission of the control signalling transmission 112. In accordance with an embodiment, the timing of the control signalling transmission is adjusted by respectively adjusting the transceiver 122. Further as described above, the resource of the first type may be either an uplink resource or a downlink resource.

Since the timing data 120 in accordance with embodiments described with regard to Fig. 1, explicitly specifies the timing of the control signalling transmission 112, such a scheme shown in Fig. 1 is also referred to as explicit signalling scheme herein.

Fig. 2 shows a communication network 200 in accordance with embodiments of the herein disclosed subject matter. The communication network 200 includes a base station 202 and a user equipment 204 in accordance with embodiments of the herein disclosed subject-matter. Entities and components which are similar or identical to the entities and components described with regard to Fig. 1 are referred to with the same reference signs in Fig. 2 and the description thereof is not repeated here.

Similar to the base station 102 in Fig. 1, the base station 202 in Fig. 2 comprises a timing entity 108 in accordance with embodiments disclosed herein, the timing entity comprising a control entity 110 adapted for determining timing data defining a timing of control signalling transmission 112 being related to a data transmission 114 on first carrier. The control signalling transmission 112 is transmitted over a second carrier having a temporal configuration of its uplink and downlink resources different from the first carrier. In accordance with an embodiment, a controller 216 of the base station 202 includes a first control unit and a second control unit. However, in contrast to the operation method performed in Fig. 1, the second control unit 216b of the controller 216 of the base station 202 in Fig. 2 is adapted for providing configuration indicating data 220 to the user equipment 204, wherein the configuration indicating data 220 is indicative of the temporal configuration further on the uplink and downlink resources of the first carrier and is also indicative of the temporal configuration of the uplink and downlink resources of the second carrier. The first control unit 216a is adapted for adjusting the timing of the control signalling transmission 114 on the base station side, e.g. by respectively adjusting the transceiver 118 of the base station.

The configuration indicating data 220, in particular the temporal configuration of the uplink and downlink resources of the first and second carrier, allows the user equipment 204 by itself to determine the timing of the control signalling transmission 112. To this end, the user equipment 204 comprises a timing entity 108 in accordance with embodiments of the herein disclosed subject-matter. For example, in accordance with embodiments of the herein disclosed subject-matter, the timing entity 108 comprises a control entity 110 which is adapted for determining, based on the configuration indicating data, timing data defining a timing of the control signalling transmission 112 which is related to the data transmission 114 on the first carrier. For example, in accordance with an embodiment, the timing data specify for the control signalling transmission a timeslot in which there is available a resource of the first type on the second carrier for a transmission of the control signalling transmission on the second carrier. According to an embodiment, the user equipment 204 further comprises a controller 224 having a first control unit 224a and a second control unit 224b. The second control und 224b is adapted for receiving the configuration indicating data 220. The first control unit 224a is adapted for receiving the timing data from the control entity 110 and adjusting, depending on these timing data a timing of a control signalling transmission 112, e.g. by specifying a timeslot in which there is available a resource of a first type on the second carrier for transmission of the control signalling transmission 112. In accordance with an embodiment, the timing of the control signalling transmission 112 on the user equipment side is adjusted by respectively adjusting the transceiver 122 of the user equipment

Hence, in accordance with embodiments of the herein disclosed subject-matter, no explicit timing data, which define a timing of a control signalling transmission, are transmitted from the base station 202 to the user equipment 204, but rather configuration indicating data 220 which are indicative of the temporal configuration of the uplink and downlink resources of the first and second carrier may be provided to the user equipment 204 by the base station 202. As mentioned above, this allows the user equipment to determine the timing of the control signalling transmission by itself, e.g. by means of a timing entity 108 disclosed herein. Further, since the timing of the control signalling transmission 112 is only implicitly provided to the user equipment 204, a scheme as shown in Fig. 2 is also referred to as implicit signalling scheme herein.

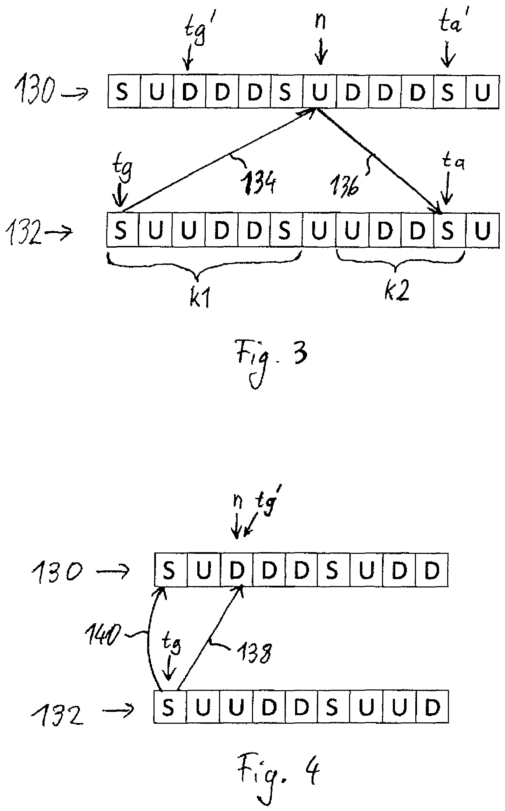

Fig. 3 illustrates a temporal configuration of two carriers and respective transmissions in accordance with embodiments of the herein disclosed subject matter. In particular, Fig. 3 shows an embodiment of two carriers 130, 132 which may be provided for example by an air interface 106 as described with regard to Fig. 1 and 2. The two carriers which are referred to as first carrier 130 and second carrier 132 in the following, have a carrier specific time division duplex configuration (TDD configuration), i.e. a carrier-specific temporal configuration of the uplink and downlink resources of the respective carrier. In Fig. 3, an "U" describes an uplink resource or a timeslot providing an uplink resource. Similarly, "D" relates to a timeslot providing a downlink resource. Further, "S" relates to a timeslot of a special type. For example, such a timeslot of special type may include a downlink pilot timeslot, an uplink pilot timeslot and/or a guard period. For the following discussion, the special timeslot "S" is considered as providing a downlink resource.

Further, it should be noted that the term "timeslot" used herein relates to a timeslot in its general meaning, i.e. to a specific time interval used for transmissions in a communication network as described herein. For example, according to an embodiment, a timeslot may be a sub-frame as defined in 3GPP TS 36.211 v 9.1.0 (March 2010). In the following, we use this term "sub-frame" synonymously for the term "time slot". However, it should be understood that a sub-frame is just an example of a time slot in a specific embodiment of the herein disclosed subject matter. In order o provide more general embodiments, the term "sub-frame" may be replaced by "time slot" in the following, as the statements given below are also applicable for "time slots" in general. Such general embodiments are also considered as being disclosed with this application.

In the following, with regard to Fig. 3 we refer to a data transmission on the first carrier 130 occurring in a first sub-frame n. Further for the following discussion, it is assumed that the second carrier 132 forms a scheduling cell and the first carrier 130 forms a scheduled cell. For single carrier transmissions, for example according to LTE release 8, the uplink grant timing for an uplink sub-frame on the scheduled cell where the data transmission occurs, such an uplink grant transmission would have been transmitted at the timeslot n-4, indicated at tg' . Such an uplink grant transmission requires a downlink resource as it is available in the first carrier 130. However, with a carrier aggregation where the uplink grant transmission is to be transmitted on the scheduling cell, i.e. on the second carrier 132, in the timeslot tg' there is no downlink resource available on the second carrier 132. Hence, in accordance with an embodiment, the control entity of a timing entity as disclosed herein is adapted for determining timing data wherein the timing data specify for an uplink grant signalling transmission a second timeslot tg = n - k1, wherein k1 is the smallest number of timeslots which spaces the second timeslot tg from the first timeslot n by a time duration greater than or equal to a maximum time duration required for signalling between the base station and the user equipment and which ensures that the second timeslot provides a downlink resource on the second carrier 132. It should be mentioned that in LTE release 9 k1 is equal to four sub-frames. Further, for the discussion of the exemplary embodiments disclosed herein we further assume that maximum time duration required for signalling between the base station and the user equipment is also four subframes.

Having now regard to the exemplary carrier configuration of the second carrier 132, one recognizes that the second timeslot tg corresponds to k1 = 6, i.e. according to an embodiment the uplink grant signalling transmission is performed in the special timeslot S at tg in Fig. 3.

Having now regard to the acknowledgement of the data transmission occurring at the first timeslot n, single carrier LTE release 8 timing provides the acknowledgement in a timeslot n+4, indicated at ta' in Fig. 3. Now, having regard to the carrier aggregation and the second carrier 132 in Fig. 3, in this exemplary embodiment there is also available a downlink resource at the timeslot n+4, indicated at ta in Fig. 3.

In order to more clearly show the relationship of the uplink grant at tg and the uplink acknowledgement ta for the data transmission occurring at timeslot n, this relationship is indicated with two arrows 134, 136. However, it should be emphasized that these arrows 134, 136 do not relate to a transmission occurring between the second carrier 132 and the first carrier 130, but rather indicate the relationship of the control signalling transmissions occurring at tg and ta on the second carrier 132 and the related data transmission occurring at timeslot n on the first carrier 130.

Although in Fig. 3 the LTE release 8 timing is also applicable to the carrier aggregation case for the specific carrier configuration shown in Fig. 3, generally the timing data provided by the control entity of the timing entity further specify for an acknowledgement/non-acknowledgement signalling transmission a third timeslot ta = n + k2, wherein k2 is the smallest number of timeslots which spaces the third timeslot ta from the first timeslot n by a time duration greater than or equal to a maximum time duration required for signalling between the base station the user equipment and which ensures the third timeslot providing a downlink resource on the first carrier 130.

Further, having again regard to the exemplary embodiment of LTE, the second carrier 132 provides at the second timeslot tg a physical downlink control channel (PDCCH) for an uplink grant. Further, at the first timeslot n the first carrier 130 provides a physical uplink shared channel (PUSCH). Further, the second carrier 132 provides at the third timeslot ta a physical indicator channel (PHICH).

Fig. 4 illustrates a timing of a control signalling transmission in accordance with embodiments of the herein disclosed subject-matter.

Fig. 4 relates to a downlink data transmission on the first carrier 130 occurring in a first timeslot n. According to an embodiment, the timing data specify for a downlink assignment signalling transmission a second timeslot tg which is the latest timeslot before n providing a downlink resource on the second carrier 132.

Again the relationship between the downlink assignment signalling transmission occurring at tg on the second carrier 132 and the corresponding data transmission occurring on the first carrier 130 at the first timeslot n is indicated with an arrow 138.

The timing introduced with an embodiment exemplary embodiment illustrated in Fig. 4 allows scheduling of a downlink sub-frame in the first timeslot n even if there is no downlink resource available at the first timeslot n on the second carrier 132. In other words, having regard to LTE, in the exemplary embodiment shown in Fig. 4 at the first timeslot n there is no physical downlink control channel available on the second carrier 132 for a downlink assignment.

It should be noted that if a downlink resource is available on both the first carrier 130 and the second carrier 132, a downlink transmission can be scheduled in the same timeslot as this requires no further communication with the user equipment. This situation shown in Fig. 4, where a downlink resource is available for downlink assignment in the second carrier 132 as well as a downlink resource is available for data transmission in the first carrier 130. The relationship between the respective data transmission on the first carrier 130 and the downlink assignment on the second carrier 132, both occurring in the second time slot tg, is indicated by the arrow 140 in Fig. 4.

For single carrier transmissions, for example according to LTE release 8, the downlink assignment for the data transmission occuring at the first time slot n would have been transmitted at the same timeslot, indicated at tg' Fig. 4.

According to an embodiment, one downlink data transmission occurring at the second timeslot tg may schedule multiple downlink data transmissions on other cells. According to a further embodiment, an indicator is included in a downlink control information (DCI) to indicate to which downlink timeslot the assignment is referring. According to an embodiment, these indicators can be jointly coded with the carrier indicator format (CIF) .

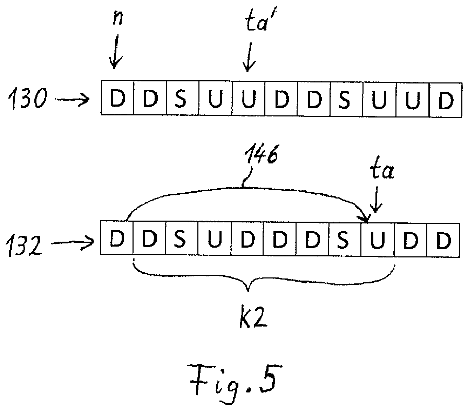

Fig. 5 illustrates a timing of a control signalling transmission in accordance with embodiments of the herein disclosed subject-matter.

Fig. 5 exemplarily shows a downlink data transmission on the first carrier 130 occurring in a first timeslot n. In accordance with an embodiment, the timing data specify for an acknowledgement/non-acknowledgement signalling transmission a second timeslot ta = n + k2 wherein k2 is the smallest number of timeslots which spaces the second timeslot ta from the first timeslot n by a time duration greater than or equal to a maximum time duration (e.g. four sub-frames as in the illustrated case) required for signalling between the base station and the user equipment and which ensures the second timeslot ta providing an uplink resource on the second carrier. As shown in Fig. 5, in the exemplary embodiment k2 = 8, i.e. ta = n + 8.

It should be mentioned, that according to single carrier transmissions in LTE the timeslot for the acknowledgement/non-acknowledgement signalling transmission would have been n + 4, indicated at ta' in Fig. 5. Further, the relationship between the downlink data transmission occurring in the first time slot n and the acknowledgement/non-acknowledgement signalling transmission occurring in the second timeslot ta is indicated with an arrow 146 in Fig. 5.

Having regard to the subject matter disclosed herein, it should be mentioned that generally the term sub-frame is only used as an exemplary example for a time slot.

Further, although some embodiments refer to a "base station" or an "e-NodeB" in case of LTE, it should be understood that each of these references is considered to implicitly disclose a respective reference to the general term "network access node". Also other terms which relate to specific standards or specific communication techniques are considered to implicitly disclose the respective general term with the desired functionality.

It should further be noted that a base station, a user equipment or a timing entity as disclosed herein are not limited to dedicated entities as described in some embodiments. Rather, the herein disclosed subject matter may be implemented in various ways in various locations in the communication network while still providing the desired functionality.

It should further be noted that any entity disclosed herein (e.g. components, units and devices, such as controllers or entities) are not limited to a dedicated entity as described in some embodiments. Rather, the herein disclosed subject matter may be implemented in various ways and with various granularity on device level or software module level while still providing the desired functionality. For example, the control units (e.g. 116a, 116b) of a controller, and, optionally, also the control entity of the timing unit may be implemented by a single controller, just to name one example of alternative configurations. Further, it should be noted that according to embodiments a separate entity (e.g. a software module, a hardware module or a hybrid module) may be provided for each of the functions disclosed herein. According to other embodiments, an entity (e.g. a software module, a hardware module or a hybrid module (combined software/hardware module)) is configured for providing two or more functions as disclosed herein. According to an embodiment, a controller such as the control entity 110 or the controllers 116, 124, 216, 224 comprises a processor device including at least one processor for carrying out at least one computer program corresponding to a respective software module. Generally, the functionality of two or more controllers or control entities described herein may be provided by a single controller. For example, two or more controllers or control entities may be provided by respective computer programs executed by a single processor device.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:
There is provided a timing entity for a communication network which includes a base station and a user equipment capable of communicating with each other over at least two carriers which have different temporal configuration of its uplink and downlink resources. The timing entity comprises a control entity adapted for determining timing data defining a timing of a control signalling transmission which is related to a data transmission on a first carrier and which uses a resource of a first type on the second carrier. According to an embodiment the timing data specify for the control signalling transmission a time slot in which there is available a resource of the first type on the second carrier for the control signalling transmission. The control entity may be implemented in a base station and/or a user equipment. Respective methods and computer programs are also disclosed.

Further, having regard to the explicit signalling scheme and the implicit signalling scheme, on can specify the following exemplary embodiments:
For explicit signaling a base station (e.g. eNB) contains
1) a transceiver for transmitting and receiving data and control signaling transmission
2) a first control unit for adjusting the transceiver based on the timing data
3) a second control unit for providing the timing data to the user equipment
4) a timing entity

For explicit signaling a user equipment contains
1) a transceiver for transmitting and receiving data transmission and control signaling transmission
2) a first control unit for adjusting the transceiver based on the timing data
3) a second control unit for receiving the timing data to user equipment

For implicit signaling eNB contains
1) a transceiver for transmitting and receiving data transmission and control signaling transmission
2) a first control entity for adjusting the transceiver based on the timing data
3) a timing entity

For implicit signaling the user equipment contains
1) a transceiver for transmitting and receiving data transmission and control signaling transmission
2) a first controller for adjusting the transceiver based on the timing data
3) a timing entity

### List of reference signs:

- 100: communication network
- 102: base station
- 104: user equipment
- 106: air interface
- 108: timing entity
- 110: control entity
- 112: control signalling transmission
- 114: data transmission
- 116: controller of 102
- 116a: first control unit of 116
- 116b: second control unit of 116
- 118: transceiver
- 120: timing data
- 122: transceiver
- 124: controller of 104
- 124a: first control unit of 124
- 124b: second control unit of 124
- 130: first carrier
- 132: second carrier
- 134, 136, 138, 140, 146: arrow indicating a relationship between transmissions
- 200: communication network
- 202: base station
- 204: user equipment
- 216: controller of 202
- 216a: first control unit of 216
- 216b: second control unit of 216
- 220: configuration indicating data
- 224: controller of 204
- 224a: first control unit of 224
- 224b: second control unit of 224

## Claims

1. A timing entity (108) of a user equipment (204) of a communication network including a base station (102, 202) and the user equipment (104, 204), wherein the base station and user equipment are capable of communicating with each other over at least two carriers (130, 132), the at least two carriers (130, 132) including a first carrier (130) and a second carrier (132), both having uplink and downlink resources, the first carrier (112, 130) and the second carrier (114, 132) having different temporal configuration of its uplink and downlink resources and wherein the first carrier first carrier is for data transmissions and the second carrier is for control signalling transmissions, the timing entity (108) comprising:
a control entity (110) adapted for determining timing data (120) defining a timing of a control signalling transmission (112), the control signalling transmission (112) being related to a data transmission (114) performed on the first carrier (130);
the control signalling transmission (112) using a resource of a first type on the second carrier, wherein the resource of the first type is either an uplink resource or a downlink resource; and
the timing data (120) specifying for the control signalling transmission (120) a time slot in which there is available a resource of the first type on the second carrier (132) for the control signalling transmission (112), **characterized in that**, the control entity (110) is adapted to determine the timing data (120) based on configuration indicating data (220), wherein the timing data defines timing of the control signalling transmission (112) on the second carrier and wherein the configuration indicating data (220) is indicative of the temporal configuration of the uplink and downlink resources of the first carrier and is also indicative of the temporal configuration of the uplink and downlink resources on the second carrier; and wherein
the user equipment (204) further comprises a controller (224) having:
a first control unit (224a) adapted to receive the timing data from the control entity (110) and to adjust, depending on these timing data, a timing of a control signalling transmission; and
a second control unit (224b) adapted to receive the configuration indicating data (220),
whereby the user equipment (204) is arranged to use the temporal configuration of the uplink and downlink resources of the first and second carriers, to determine by itself the timing of the control signalling transmission (112).

2. The timing entity according to claim 1,
the data transmission (114) occurring in a first time slot (n); and
the timing data specifying for the control signalling transmission a second time slot (tg);
the second time slot (tg) being spaced by a temporal distance from the first time slot (n);
the temporal distance (kl, k2) being greater than or equal to a maximum time duration required for signalling between the base station (102, 202) and the user equipment (104, 204) while the second time slot is the temporally closest time slot providing a resource of the first type required for the control signalling transmission (112).

3. The timing entity according to claim 1, wherein
the data transmission (114) is an uplink data transmission on the first carrier (130) occurring in a first time slot (n); and
the control signalling transmission (112) is an uplink grant signalling transmission; the timing data (120) specifying for the uplink grant signalling transmission a second time slot tg = n - k1, wherein k1 is the smallest number of time slots which
spaces the second time slot (tg) from the first time slot (n) by a time duration greater than or equal to a maximum time duration required for signalling between the base station and the user equipment; and
ensures the second time slot (tg) providing a downlink resource on the second carrier (132).

4. The timing entity according to claim 1 wherein
the data transmission (114) is an uplink data transmission on the first carrier (130) occurring in a first time slot n; and
the control signalling transmission (112) is an acknowledgement/non-acknowledgement signalling transmission;
the timing data (120) specifying for the acknowledgement/non-acknowledgement signalling transmission a second time slot ta = n + k2, wherein k2 is the smallest number of time slots which
spaces the second time slot (ta) from the first time slot (n) by a time duration greater than or equal to a maximum time duration required for signalling between the base station (102, 202) and the user equipment (104 , 204); and
ensures the second time slot (ta) providing a downlink resource on the second carrier (132).

5. The timing entity according to claim 1, wherein
the data transmission (114) is a downlink data transmission on the first carrier (130) occurring in a first time slot (n); and
the control signalling transmission (112) is a downlink assignment signalling transmission;
the timing data (120) specifying for the downlink assignment signalling transmission (112) a second time slot (tg) which is the latest time slot before the first time slot (n) that provides a downlink resource on the second carrier (132).

6. The timing entity according to claim 1 wherein
the data transmission (114) is a downlink data transmission on the first carrier (130) occurring in a first time slot (n); and
the control signalling transmission (112) is an acknowledgement/non-acknowledgement signalling transmission;
the timing data (120) specifying for the acknowledgement/non-acknowledgement signalling transmission a second time slot ta = n + k2, wherein k2 is the smallest number of time slots which
spaces the second time slot (ta) from the first time slot (n) by a time duration greater than or equal to a maximum time duration required for signalling between the base station and the user equipment and
ensures the second time slot (ta) providing an uplink resource on the second carrier (132).

7. Method of operating a timing entity (110) in a user equipment of a communication network including a base station and the user equipment (104, 204)), wherein the base station and user equipment are capable of communicating with each other over at least two carriers {130, 132,) the at least two carriers (130, 132) including a first carrier (130) and a second carrier (122), both having uplink and downlink resources, the first carrier and the second carrier (130, 230) having different temporal configuration of its uplink and downlink resources and wherein the first carrier first carrier is for data transmissions and the second carrier is for control signalling transmissions, the method comprising:
determining timing data (120) defining a timing of a control signalling transmission (112) being related to a data transmission performed on the first carrier;
the control signalling transmission (112) being related to the data transmission (114) on the first carrier (130) using a resource of a first type on the second carrier, wherein the resource of the first type is either an uplink resource or a downlink resource; and
the timing data (120) specifying for the control signalling transmission (112) a time slot in which there is available a resource of the first type on the second carrier (132) for a transmission of the control signalling being related to the data transmission (114) on the first carrier (130), wherein the timing data (120) is determined based on configuration indicating data (220) wherein the timing data defines timing of the control signalling transmission (112) on the second carrier and wherein the configuration indicating data (220) is indicative of the temporal configuration of the uplink and downlink resources of the first carrier and is also indicative of the temporal configuration of the uplink and downlink resources on the second carrier, and further comprising:
at a first control unit in the user equipment, receiving timing data from the control entity (110) and adjusting, depending on these timing data, a timing of a control signalling transmission; and
at a second control unit (224b) in the user equipment, receiving the configuration indicating data (220), and
using the temporal configuration of the uplink and downlink resources of the first and second carriers to have the user equipment determine by itself the timing of the control signalling transmission (112).

8. A computer program, the computer program being adapted for, when executed by a data processor, cause the data processor to carry out the method as set forth in claim 7.

## Patentansprüche

1. Zeitgebungseinheit (108) eines Benutzergeräts (204) eines Kommunikationsnetzwerks, das eine Basisstation (102, 202) und das Benutzergerät (104, 204) enthält, wobei die Basisstation und das Benutzergerät in der Lage sind, miteinander über mindestens zwei Träger (130, 132) zu kommunizieren, wobei die mindestens zwei Träger (130, 132) einen ersten Träger (130) und einen zweiter Träger (132) umfassen, die beide Uplink- und Downlink-Ressourcen enthalten, wobei der erste Träger (112, 130) und der zweite Träger (114, 132) unterschiedliche zeitliche Konfigurationen ihrer Uplink- und Downlink-Ressourcen aufweisen und wobei der erste Träger für Datenübertragungen und der zweite Träger für Steuersignalübertragungen ausgebildet ist, wobei die Zeitgebungseinheit (108) Folgendes aufweist:
- eine Steuereinheit (110), die zum Bestimmen von Zeitgebungsdaten (120) ausgelegt ist, die einen Zeitpunkt einer Steuersignalübertragung (112) definieren, wobei sich die Steuersignalübertragung (112) auf eine auf dem ersten Träger (130) durchgeführte Datenübertragung (114) bezieht;
- wobei die Steuersignalübertragung (112) eine Ressource eines ersten Typs auf dem zweiten Träger verwendet, wobei die Ressource des ersten Typs entweder eine Uplink-Ressource oder eine Downlink-Ressource ist; und wobei die Zeitgebungsdaten (120), die für die Steuersignalübertragung (120) einen Zeitschlitz angeben, in dem eine Ressource des ersten Typs auf dem zweiten Träger (132) für die Steuersignalübertragung (112) verfügbar ist,
**dadurch gekennzeichnet,**
**dass** die Steuereinheit (110) dazu ausgelegt ist, die Zeitgebungsdaten (120) auf der Grundlage von Konfigurationsanzeigedaten (220) zu bestimmen,
- wobei die Zeitgebungsdaten den Zeitpunkt der Steuersignalübertragung (112) auf dem zweiten Träger definieren und
- wobei die Konfigurationsanzeigedaten (220) die zeitliche Konfiguration der Uplink- und Downlink-Ressourcen des ersten Trägers anzeigen und außerdem die zeitliche Konfiguration der Uplink- und Downlink-Ressourcen des zweiten Trägers anzeigen; und
- wobei das Benutzergerät (204) ferner eine Steuerung (224) aufweist, die Folgendes aufweist:
∘ eine erste Steuereinheit (224a), die dazu ausgelegt ist, die Zeitgebungsdaten von dem Benutzergerät (204) von der Steuereinheit (110) zu empfangen und in Abhängigkeit von diesen Zeitgebungsdaten den Zeitpunkt einer Steuersignalübertragung einzustellen; und
∘ eine zweite Steuereinheit (224b), die dazu ausgelegt ist, die Konfigurationsanzeigedaten (220) zu empfangen,
so dass das Benutzergerät (204) dazu eingerichtet ist, die zeitliche Konfiguration der Uplink- und Downlink-Ressourcen der ersten und zweiten Träger zu verwenden, um den Zeitpunkt der Steuersignalübertragung (112) selbst zu bestimmen.

2. Zeitgebungseinheit nach Anspruch 1,
wobei die Datenübertragung (114) in einem ersten Zeitschlitz (n) stattfindet; und
wobei die Zeitgebungsdaten für die Steuersignalübertragung einen zweiten Zeitschlitz (tg) angeben;
wobei der zweite Zeitschlitz (tg) durch einen zeitlichen Abstand von dem ersten Zeitschlitz (n) beabstandet ist;
wobei der zeitliche Abstand (kl, k2) größer oder gleich einer maximalen Zeitdauer ist, die für die Signalisierung zwischen der Basisstation (102, 202) und dem Benutzergerät (104, 204) erforderlich ist, während der zweite Zeitschlitz der zeitlich nächstgelegene Zeitschlitz ist, der eine Ressource des ersten Typs bietet, die für die Steuersignalübertragung (112) erforderlich ist.

3. Zeitgebungseinheit nach Anspruch 1,
wobei die Datenübertragung (114) eine Uplink-Datenübertragung auf dem ersten Träger (130) ist, die in einem ersten Zeitschlitz (n) stattfindet; und
wobei die Steuersignalübertragung (112) eine Uplink-Grant-Signalübertragung ist;
wobei die Zeitgebungsdaten (120) für die Uplink-Grant-Signalübertragung einen zweiten Zeitschlitz tg = n - k1 angeben, wobei k1 die kleinste Anzahl von Zeitschlitzen ist, die den zweiten Zeitschlitz (tg) von dem ersten Zeitschlitz (n) um eine Zeitdauer größer oder gleich einer maximalen Zeitdauer beabstandet, die für die Signalisierung zwischen der Basisstation und dem Benutzergerät erforderlich ist; und die sicherstellt, dass der zweite Zeitschlitz (tg) eine Downlink-Ressource auf dem zweiten Träger (132) bereitstellt.

4. Zeitgebungseinheit nach Anspruch 1,
wobei die Datenübertragung (114) eine Uplink-Datenübertragung auf dem ersten Träger (130) ist, die in einem ersten Zeitschlitz n stattfindet; und
wobei die Steuersignalübertragung (112) eine Bestätigungs-/Nicht-Bestätigungs-Signalübertragung ist;
wobei die Zeitgebungsdaten (120) für die Bestätigungs-/Nicht-Bestätigungs-Signalübertragung einen zweiten Zeitschlitz ta = n + k2 angeben,
wobei k2 die kleinste Anzahl von Zeitschlitzen ist, die den zweiten Zeitschlitz (ta) von dem ersten Zeitschlitz (n) um eine Zeitdauer beabstandet, die größer oder gleich einer maximalen Zeitdauer ist, die für die Signalisierung zwischen der Basisstation (102, 202) und dem Benutzergerät (104, 204) erforderlich ist; und die sicherstellt, dass der zweite Zeitschlitz (ta) eine Downlink-Ressource auf dem zweiten Träger (132) bereitstellt.

5. Zeitgebungseinheit nach Anspruch 1,
wobei die Datenübertragung (114) eine Downlink-Datenübertragung auf dem ersten Träger (130) ist, die in einem ersten Zeitschlitz (n) stattfindet; und
wobei die Steuersignalübertragung (112) eine Downlink-Zuweisungs-Signalübertragung ist;
wobei die Zeitgebungsdaten (120) für die Downlink-Zuweisungs-Signalübertragung (112) einen zweiten Zeitschlitz (tg) angeben, der der letzte Zeitschlitz vor dem ersten Zeitschlitz (n) ist, der eine Downlink-Ressource auf dem zweiten Träger (132) bereitstellt.

6. Zeitgebungseinheit nach Anspruch 1,
wobei die Datenübertragung (114) eine Downlink-Datenübertragung auf dem ersten Träger (130) ist, die in einem ersten Zeitschlitz (n) stattfindet; und wobei die Steuersignalübertragung (112) eine Bestätigungs-/Nicht-Bestätigungs-Signalübertragung ist;
wobei die Zeitgebungsdaten (120) für die Bestätigungs-/Nicht-Bestätigungs-Signalübertragung einen zweiten Zeitschlitz ta = n + k2 angeben, wobei k2 die kleinste Anzahl von Zeitschlitzen ist, die den zweiten Zeitschlitz (ta) von dem ersten Zeitschlitz (n) um eine Zeitdauer beabstanden, die größer oder gleich einer maximalen Zeitdauer ist, die für die Signalisierung zwischen der Basisstation und dem Benutzergerät erforderlich ist, und die sicherstellt, dass der zweite Zeitschlitz (ta) eine Uplink-Ressource auf dem zweiten Träger (132) bereitstellt.

7. Verfahren zum Betreiben einer Zeitgebungseinheit (110) in einem Benutzergerät eines Kommunikationsnetzwerks, das eine Basisstation und das Benutzergerät (104, 204) enthält, wobei die Basisstation und das Benutzergerät in der Lage sind, miteinander über mindestens zwei Träger (130, 132) zu kommunizieren, wobei die mindestens zwei Träger (130, 132) einen ersten Träger (130) und einen zweiter Träger (132) umfassen, die beide Uplink- und Downlink-Ressourcen enthalten, wobei der erste Träger und der zweite Träger (130, 230) unterschiedliche zeitliche Konfigurationen ihrer Uplink- und Downlink-Ressourcen aufweisen und wobei der erste Träger für Datenübertragungen und der zweite Träger für Steuersignalübertragungen ausgebildet ist,
wobei das Verfahren folgende Schritte umfasst:
- Bestimmen von Zeitgebungsdaten (120), die einen Zeitpunkt einer Steuersignalübertragung (112) definieren, die sich auf eine auf dem ersten Träger durchgeführte Datenübertragung bezieht;
wobei sich die Steuersignalübertragung (112) auf die Datenübertragung (114) auf dem ersten Träger (130) unter Verwendung einer Ressource eines ersten Typs auf dem zweiten Träger bezieht, wobei die Ressource des ersten Typs entweder eine Uplink-Ressource oder eine Downlink-Ressource ist; und
wobei die Zeitgebungsdaten (120) für die Steuersignalübertragung (112) einen Zeitschlitz angeben, in dem eine Ressource des ersten Typs auf dem zweiten Träger (132) für eine Übertragung der Steuersignale verfügbar ist, die sich auf die Datenübertragung (114) auf dem ersten Träger (130) bezieht, wobei die Zeitgebungsdaten (120) auf der Grundlage von Konfigurationsanzeigedaten (220) bestimmt werden, wobei die Zeitgebungsdaten den Zeitpunkt der Steuersignalübertragung (112) auf dem zweiten Träger definieren und wobei die Konfigurationsanzeigedaten (220) die zeitliche Konfiguration der Uplink- und Downlink-Ressourcen des ersten Trägers anzeigen und außerdem die zeitliche Konfiguration der Uplink- und Downlink-Ressourcen auf dem zweiten Träger anzeigen, und
wobei das Verfahren ferner folgende Schritte umfasst:
∘ in einer ersten Steuereinheit in dem Benutzergerät, Empfangen von Zeitgebungsdaten von der Steuereinheit (110) und Einstellen, in Abhängigkeit von diesen Zeitgebungsdaten, von dem Zeitpunkt einer Steuersignalübertragung; und
∘ in einer zweiten Steuereinheit (224b) in dem Benutzergerät, Empfangen von Konfigurationsanzeigedaten (220), und Verwenden der zeitlichen Konfiguration der Uplink- und Downlink-Ressourcen des ersten und zweiten Trägers, so dass das Benutzergerät selbst den Zeitpunkt der Steuersignalübertragung (112) bestimmt.

8. Computerprogramm, wobei das Computerprogramm dazu ausgelegt ist, wenn es von einem Datenprozessor ausgeführt wird, den Datenprozessor dazu zu veranlassen, das im Anspruch 7 angegebene Verfahren auszuführen.

## Revendications

1. Entité de commande du temps (108) d'un équipement utilisateur (204) d'un réseau de communication comportant une station de base (102, 202) et l'équipement utilisateur (104, 204), selon lequel la station de base et l'équipement utilisateur sont capables de communiquer entre eux via au moins deux porteurs (130, 132), les au moins deux porteurs (130, 132) comportant un premier porteur (130) et un deuxième porteur (132), les deux présentant des ressources à liaison montante et descendante, le premier porteur (112, 130) et le deuxième porteur (114,132) présentant une configuration temporelle différente de ses ressources à liaison montante et descendante, et selon lequel le premier porteur est destiné à des transmissions de données et le deuxième porteur est destiné aux transmissions de signaux de contrôle, l'entité de commande du temps (108) comprenant :
une entité de contrôle (110) adaptée au calcul de données de commande du temps (120) définissant la commande du temps d'une transmission de signaux de contrôle (112), la transmission de signaux de contrôle (112) étant liée à une transmission de données (114) effectuée au niveau du premier porteur (130 ;
la transmission de signaux de contrôle (112) utilisant une ressource d'un premier type au niveau du deuxième porteur, selon lequel la ressource du premier type est soit une ressource à liaison montante, soit une ressource à liaison descendante ; et
les données de commande du temps (120) précisent, pour la transmission de signaux de contrôle (112), une fenêtre de temps dans laquelle une ressource du premier type est disponible au niveau du deuxième porteur (132) pour la transmission de signaux de contrôle (112), **caractérisée en ce que**, l'entité de contrôle (110) est adaptée à calculer les données de commande du temps (120) sur la base de données d'indication de configuration (220) ;
selon laquelle les données de commande du temps définissent la commande du temps de la transmission de signaux de contrôle (112) au niveau du deuxième porteur et selon laquelle les données d'indication de configuration (220) sont indicatives de la configuration temporelle des ressources à liaison montante et descendante du premier porteur et sont également indicatives de la configuration temporelle des ressources à liaison montante et descendante du deuxième porteur ; et
selon laquelle l'équipement utilisateur (204) comprend en outre un contrôleur (224) présentant :
une première unité de contrôle (224a) adaptée à recevoir les données de commande du temps en provenance de l'entité de contrôle (110) et ajuster, en fonction de ces données de commande du temps, la commande du temps d'une transmission de signaux de contrôle ; et
une deuxième unité de contrôle (224b) adaptées à recevoir les données d'indication de configuration (220) ;
selon laquelle l'équipement utilisateur (204) est organisé pour utiliser la configuration temporelle des ressources à liaison montante et descendante des premier et deuxième porteurs afin de calculer tout seul la commande du temps de la transmission de signaux de contrôle (112).

2. Entité de commande du temps selon la revendication 1, selon laquelle :
la transmission de données (114) a lieu dans une première fenêtre de temps (n) ;
et les données de commande du temps précisent une deuxième fenêtre de temps (tg) pour la transmission de signaux de contrôle ;
la deuxième fenêtre de temps (tg) étant espacée d'une distance temporelle de la première fenêtre de temps (n) ;
la distance temporelle (kl, k2) étant égale ou supérieure à une durée de temps maximal requise pour le signalement entre la station de base (102, 202) et l'équipement utilisateur (104, 204), alors que la deuxième fenêtre de temps est celle qui est temporellement la plus proche fournissant une ressource du premier type requis pour la transmission de signaux de contrôle (112).

3. Entité de commande du temps selon la revendication 1, selon laquelle :
la transmission de données (114) est une transmission de données à liaison montante au niveau du premier porteur (130) ayant lieu dans une première fenêtre de temps (n) ; et
la transmission de signaux de contrôle (112) est une transmission de signal d'autorisation de liaison montante ;
les données de commande du temps (120) précisent une deuxième fenêtre de temps tg = n - k1 pour la transmission de signal d'autorisation de liaison montante, selon laquelle k1 est le nombre de fenêtres de temps le plus petit espaçant la deuxième fenêtre de temps (tg) de la première fenêtre de temps (n) d'une durée de temps égale ou supérieure à une durée de temps maximal requise pour le signalement entre la station de base et l'équipement utilisateur ; et
elle assure que la deuxième fenêtre de temps (tg) fournit une ressource de liaison descendante au niveau du deuxième porteur (132) .

4. Entité de commande du temps selon la revendication 1, selon laquelle la transmission de données (114) est une transmission de données à liaison montante au niveau du premier porteur (130) ayant lieu dans une première fenêtre de temps n ; et
la transmission de signaux de contrôle (112) est une transmission de contrôle à accusé de réception / non-réception ;
les données de commande du temps (120) précisant une deuxième fenêtre de temps ta = n + k2 pour la transmission de contrôle à accusé de réception / non-réception, selon laquelle k2 est le nombre le plus petit de fenêtres de temps espaçant la deuxième fenêtre de temps (ta) de la première fenêtre de temps (n) d'une durée de temps égale ou supérieure à une durée de temps maximale requise pour le signalement entre la station de base (102, 202) et l'équipement utilisateur (104,204) ; et
elle assure que la deuxième fenêtre de temps (ta) fournit une ressource de liaison descendante au niveau du deuxième porteur (132).

5. Entité de commande du temps selon la revendication 1, selon laquelle :
la transmission de données (114) est une transmission de données à liaison descendante au niveau du premier porteur (130) ayant lieu dans une première fenêtre de temps (n) ; et
la transmission de signaux de contrôle (112) est une transmission de signaux de contrôle à liaison descendante ;
les données de commande du temps (120) précisant une deuxième fenêtre de temps (tg) pour la transmission de signaux de contrôle à liaison descendante (112) qui est la fenêtre de temps la plus récente avant la première fenêtre de temps (n) qui fournit une ressource à liaison descendante au niveau du deuxième porteur (132) .

6. Entité de commande du temps selon la revendication 1, selon laquelle :
la transmission de données (114) est une transmission de données à liaison descendante au niveau du premier porteur (130) ayant lieu dans une première fenêtre de temps (n) ; et
la transmission de signaux de contrôle (112) est une transmission de contrôle à accusé de réception / non-réception ;
les données de commande du temps (120) précisant une deuxième fenêtre de temps ta = n + k2 pour la transmission de signaux de contrôle à accusé de réception / non-réception, selon laquelle k2 est le nombre le plus petit de fenêtres de temps espaçant la deuxième fenêtre de temps (ta) de la première fenêtre de temps (n) d'une durée de temps égale ou supérieure à une durée de temps maximale requise pour le signalement entre la station de base et l'équipement utilisateur ; et
elle assure que la deuxième fenêtre de temps (ta) fournit une ressource à liaison montante au niveau du deuxième porteur (132).

7. Procédé de mise en fonctionnement d'une entité de commande du temps (110) dan un équipement utilisateur d'un réseau de communication comportant une station de base et l'équipement utilisateur (104, 204), selon lequel la station de base et l'équipement utilisateur sont capables de communiquer entre eux via au moins deux porteurs (130, 132), les au moins deux porteurs (130, 132) comportant un premier porteur (130) et un deuxième porteur (132), les deux présentant des ressources à liaison montante et descendante, le premier porteur et le deuxième porteur (130, 230) présentant une configuration temporelle différente de ses ressources à liaison montante et descendante, et selon lequel le premier porteur est destiné à des transmissions de données et le deuxième porteur est destiné aux transmissions de signaux de contrôle, le procédé comprenant :
le calcul de données de commande du temps (120) définissant la commande du temps d'une transmission de signaux de contrôle (112), la transmission de signaux de contrôle (112) étant liée à une transmission de données effectuée au niveau du premier porteur ;
la transmission de signaux de contrôle (112) étant liée aux données de transmission (114) au niveau du premier porteur (130) utilisant une ressource d'un premier type au niveau du deuxième porteur, selon lequel la ressource du premier type est soit une ressource à liaison montante, soit une ressource à liaison descendante ; et
les données de commande du temps (120) précisent, pour la transmission de signaux de contrôle (112), une fenêtre de temps dans laquelle une ressource du premier type est disponible au niveau du deuxième porteur (132) pour la transmission de signaux de contrôle (112), la transmission de signaux de contrôle étant liée aux données de transmission (114) au niveau du premier porteur (130), selon lequel les données de commande du temps (120) sont calculées sur la base de données indicatives de configuration (220), selon lequel les données de commande du temps définissent la commande du temps de la transmission de signaux de contrôle (112) au niveau du deuxième porteur, et selon lequel les données indicatives de configuration (220) sont indicatives de la configuration temporelle des ressources à liaison montante et descendante au niveau du premier porteur, et sont également indicatives de la configuration temporelle des ressources à liaison montante et descendante du deuxième porteur, et comprenant en outre :
au niveau d'une première unité de contrôle de l'équipement utilisateur, la réception de données de commande du temps en provenance de l'entité de contrôle (110) et l'ajustement, en fonction de ces données de commande du temps, de la commande du temps d'une transmission de signaux de contrôle ; et
au niveau d'une deuxième unité de contrôle (224b) de l'équipement utilisateur, la réception des données indicatives de configuration (220) ; et
l'utilisation de la configuration temporelle des ressources à liaison montante et descendante des premier et deuxième porteurs afin que l'équipement utilisateur calcule tout seul la commande du temps de la transmission de signaux de contrôle (112).

8. Programme d'ordinateur, celui-ci étant adapté à, lorsqu'il est exécuté par un processeur de données, faire fonctionner le processeur de données pour mettre en œuvre le procédé selon la revendication 7.
